# EUROPEAN PATENT APPLICATION

(11) **EP 4 617 320 A1**
(43) Date of publication of application: **17.09.2025**
(21) Application number: 23887503.3
(22) Date of filing: 30.06.2023
(51) Int. Cl.: C08L 77/06, C08K 5/521, C08K 3/38, C08K 9/04, C08K 7/14, C08J 5/08

(54) **HALOGEN-FREE FLAME-RETARDANT GLASS FIBER REINFORCED NYLON MATERIAL, AND PREPARATION METHOD THEREFOR AND USE THEREOF**

(30) Priority: 10.11.2022 CN 202211404025
(71) Applicant: Shanghai Zhonglei New Material Science Co., Ltd., Shanghai 201306 (CN)
(72) Inventor: LIU, Chunyan, Shanghai 201306 (CN); LIU, Xiangdong, Shanghai 201306 (CN)
(74) Representative: J A Kemp LLP
(86) International application number: PCT/CN2023/104834
(87) International publication number: WO 2024/098807

(57) **Abstract**

Disclosed are a halogen-free flame-retardant glass fiber reinforced nylon material, and a preparation method therefor and the use thereof. The halogen-free flame-retardant glass fiber reinforced nylon material comprises 45-85 parts by weight of nylon, 10-55 parts by weight of glass fibers, 2-10 parts by weight of a phosphate flame retardant and 0.01-2 parts by weight of a terminal acetylenic acid ester modifier. The glass fibers and the phosphate flame retardant are bonded together by adding the terminal acetylenic acid ester modifier, which facilitates improving the candlewick effect in the glass fiber reinforced nylon material, and can also increase the compatibility of the nylon, the glass fibers and the flame retardant, such that the glass fiber reinforced nylon material having a very good flame retardant property can be obtained with a relatively low addition amount of the phosphate flame retardant without affecting the mechanical properties of the glass fiber reinforced nylon material itself, and finally, the halogen-free flame-retardant glass fiber reinforced nylon material having good flame retardant and mechanical properties is obtained.

## Description

### TECHNICAL FIELD

The present application relates to the technical field of composite materials, such as a halogen-free flame-retardant glass fiber-reinforced nylon material, and a preparation method therefor and use thereof.

### BACKGROUND

With the rapid development of industrial technology, the automotive industry not only requires improvements in engine efficiency but also increasingly stringent demands for reducing fuel consumption and exhaust emissions. Simultaneously, to achieve automobile lightweighting, automotive materials must exhibit properties such as being lightweight, heat-resistant, high-strength, dimensionally stable, and flame-retardant. High-temperature-resistant nylon has become one of the ideal materials. The development of high-temperature-resistant nylon enables the miniaturization, lightweighting, and enhanced power performance of automotive products. This material can provide automotive components with superior heat resistance or even replace metal materials in the production of certain automotive parts.

To further expand the application fields of high-temperature-resistant nylon, glass fibers are widely used to modify it. However, glass fiber-reinforced nylon materials exhibit a "wick effect." As the name implies, this effect resembles the burning of a candle wick. When ignited, the glass fibers act as conduits: the melted liquid flows along the fibers toward high-temperature areas. The tips of the fibers, closest to the flame, reach the highest temperatures, causing the liquid to vaporize and combust. The heat generated by combustion further drives the liquid upward, sustaining vaporization and burning in a vicious cycle. Consequently, glass fiber-reinforced nylon materials are more flammable than pure nylon. During combustion, flame dripping occurs, spreading the fire to a wider area. This significantly limits the application of glass fiber-reinforced nylon materials in fields requiring higher flame retardancy.

Therefore, how to improve the flame-retardant performance of glass fiber-reinforced nylon composites has become the focus of current research. CN102382297A discloses a rare earth flame-retardant composite nylon material; caprolactam, MoS₂, La₂O₃, decabromodiphenylethane, TDI, and carbon black are added to a reaction kettle according to a certain mass ratio for heating, stirring, and vacuuming at the same time to form a molten material, after maintaining the boiling state for a certain period of time, the molten material is poured into a preheated mold to place in a high-temperature oven for polymerization; after cooling, a rare earth flame-retardant composite nylon material is obtained, and the rare earth flame-retardant composite nylon material obtained by this disclosure has higher wear resistance, combustion resistance, high-temperature resistance and corrosion resistance; the obtained rare earth flame-retardant composite nylon material can work continuously at the temperature of 180-220°C for 10 h without change, and self-extinguish within 3 s after leaving the fire when combustion occurs, has a water absorption rate of only 0.03-0.6% as well as an antistatic effect, the average resistance of the upper surface is 3.2 × 10⁵ Ω, and a reduced production cost. CN105440671A discloses a high glow-wire glass fiber reinforced flame-retardant nylon composite material and a preparation method therefor; the high glow-wire glass fiber reinforced flame-retardant nylon composite material includes PA66 resin of 30-40%, PA6 resin of 3-5%, a toughening agent of 2-3%, a main flame retardant of 18-22%, an auxiliary flame retardant of 6-8%, an antioxidant of 0.3-0.5%, a coupling agent of 0-0.5%, a lubricant of 0-1%, and glass fibers of 25-35%, in mass ratio respectively. The preparation method is: the above-mentioned raw material components are added to a extruder for melt plasticization, and subjected to water-cooling, pulling to strip, and granulation after extrusion by the extruder die, to finally give the product flame-retardant nylon composite material; the impact strength of the flame-retardant nylon composite material obtained by this disclosure can reach 150 J/M or more, the tensile strength can reach 135 MPA, and the bending strength can reach 240 MPA or more; the temperature of the glow-wire of the flame-retardant material is improved, while the cost of the material is reduced, and the problem of brittle of the flame-retardant material is effectively improved. However, the flame-retardant glass fiber-reinforced nylon material provided in the above-mentioned related technologies often cannot fundamentally improve the wick effect produced by the glass fiber-reinforced nylon material, and a large number of flame retardants need to be added to obtain the glass fiber-reinforced nylon material with excellent flame-retardant performance; because the compatibility between the flame retardant and nylon is poor, although the flame retardancy of the obtained glass fiber-reinforced nylon material meets the requirements, the mechanical properties of the composite materials, especially the impact resistance will be drastically reduced, which also restricts the further development of glass fiber-reinforced nylon composite materials.

Therefore, it is an urgent technical problem in the art of developing a halogen-free flame-retardant glass fiber-reinforced nylon material with excellent flame retardant properties and mechanical properties.

### SUMMARY

The following is a summary of subject matter that is described in detail herein. The summary is not intended to be limiting as to the scope of the claims.

An embodiment of the present application provides a halogen-free flame-retardant glass fiber-reinforced nylon material, and a preparation method therefor and use thereof. The halogen-free flame-retardant glass fiber-reinforced nylon material can fundamentally improve the wick effect in glass fiber-reinforced nylon materials, and has excellent flame-retardant performance under the condition of a relatively low additive amount of phosphate flame retardant without affecting the mechanical properties of glass fiber-reinforced nylon material itself, and a halogen-free flame-retardant glass fiber-reinforced nylon material with both outstanding flame retardancy performance and mechanical properties is obtained.

In a first aspect, an embodiment of the present application provides a halogen-free flame-retardant glass fiber-reinforced nylon material, and the halogen-free flame-retardant glass fiber-reinforced nylon material includes the following components in parts by weight:

| | |
|---|---|
| nylon | 45-85 parts; |
| glass fibers | 10-55 parts; |
| a phosphate flame retardant | 2-10 parts; and |
| a terminal alkynoate modifier | 0.01-2 parts. |

The nylon may be 47 parts, 49 parts, 51 parts, 53 parts, 55 parts, 57 parts, 59 parts, 61 parts, 63 parts, 65 parts, 67 parts, 69 parts, 73 parts, 76 parts, 79 parts, 82 parts, or 84 parts, and specific values between the above values, which are not recited in the present application for brevity.

The glass fibers may be 15 parts, 20 parts, 25 parts, 30 parts, 35 parts, 40 parts, 45 parts, or 50 parts, and specific values between the above values, which are not recited in the present application for brevity.

The phosphate flame retardant may be 3 parts, 4 parts, 5 parts, 6 parts, 7 parts, 8 parts, or 9 parts, and specific values between the above values, which are not recited in the present application for brevity.

The terminal alkynoate modifier may be 0.05 parts, 0.1 parts, 0.2 parts, 0.3 parts, 0.4 parts, 0.5 parts, 0.6 parts, 0.7 parts, 0.8 parts, or 0.9 parts, and specific values between the above values, which are not recited in the present application for brevity.

The halogen-free flame-retardant glass fiber-reinforced nylon material provided by the present application contains a terminal alkynoate modifier. One end of the terminal alkynoate modifier is connected with glass fibers by an ester group, and the other end can be connected with phosphate flame retardant by an alkyne group, thus the glass fibers and the phosphate flame retardant can be connected together by the terminal alkynoate modifier; then the mixture is blended with nylon, which can effectively improve the "wick effect " of the glass fiber-reinforced nylon material, and also help to increase the compatibility of nylon, glass fibers and the flame retardant, enabling the preparation of glass fiber-reinforced nylon material with excellent flame-retardant properties without adding a large number of flame retardant, and the mechanical properties of the glass fiber-reinforced nylon material itself will not be affected, and finally obtain the glass fiber-reinforced nylon material with excellent mechanical properties and flame-retardant properties.

Preferably, the phosphate flame retardant includes melamine phosphate.

Preferably, the glass fiber is alkali-free glass fiber.

Preferably, raw materials for preparing the terminal alkynoate modifier include an alkynoic acid and a fatty alcohol.

Preferably, the alkynoic acid includes hexynoic acid and/or 10-undecynoic acid.

Preferably, the fatty alcohol includes ethanol and/or propanol.

Preferably, a method for preparing the terminal alkynoate modifier includes the following method: subjecting the alkynoic acid and the fatty alcohol to a reaction in a solvent, extracting and separating to obtain the terminal alkynoate modifier;
preferably, the solvent includes concentrated sulfuric acid.

Preferably, the halogen-free flame-retardant glass fiber-reinforced nylon material further includes nano-calcium borate.

Preferably, a content of the nano-calcium borate in the halogen-free flame-retardant glass fiber-reinforced nylon material in parts by weight is 1-5 parts, for example, 1.5 parts, 2 parts, 2.5 parts, 3 parts, 3.5 parts, 4 parts, or 4.5 parts, and specific values between the above values, which are not recited in the present application for brevity.

As a preferred technical solution of the present application, the halogen-free flame-retardant glass fiber-reinforced nylon material provided by the present application is added with nano-calcium borate as a synergistic flame retardant, which helps to promote the formation of the carbonization layer of the material during combustion, so that the smoke and combustible substances formed in the material can be greatly reduced in the gas phase, thereby the flame-retardant properties of the glass fiber-reinforced nylon material can be further improved.

Preferably, the halogen-free flame-retardant glass fiber-reinforced nylon material further includes any one or a combination of at least two of a toughening agent, a coupling agent, an antioxidant or a lubricant.

Preferably, the toughening agent includes any one or a combination of at least two of methyl methacrylate-butadiene-styrene copolymer, maleic anhydride grafted ethylene-octene copolymer elastomer, ethylene-butyl acrylate-glycidyl methacrylate copolymer, ethylene-methyl acrylate-glycidyl methacrylate copolymer, or methyl methacrylate-styrene-organosilicon copolymer.

Preferably, the coupling agent includes any one or a combination of at least two of γ-aminopropyltrimethoxysilane, γ-aminopropyltriethoxysilane, γ-glycidyloxypropyltrimethoxysilane or γ-glycidyloxypropyltriethoxysilane.

Preferably, the antioxidant includes any one or a combination of at least two of β-(3,5-di-tert-butyl-4-hydroxyphenyl)propionate n-octadecyl alcohol ester, 2,6-tributyl-4-methylphenol, bis(3,5-tributyl-4-hydroxyphenyl)thioether, triethylene glycol bis-β-(3-tert-butyl-4-hydroxy-5 -methylphenyl)propionate, or N,N'-bis[3-(3,5-di-tert-butyl-4-hydroxyphenyl)propionyl]hexanediamine.

Preferably, the lubricant includes any one or a combination of at least two of pentaerythritol stearate, vinyl wax or silicone oil.

Preferably, a content of the toughening agent in the halogen-free flame-retardant glass fiber-reinforced nylon material in parts by weight is 0.1-1 part, for example, 0.2 parts, 0.3 parts, 0.4 parts, 0.5 parts, 0.6 parts, 0.7 parts, 0.8 parts, or 0.9 parts, and specific values between the above values, which are not recited in the present application for brevity.

Preferably, a content of the coupling agent in the halogen-free flame-retardant glass fiber-reinforced nylon material in parts by weight is 0.5-5 parts, for example, 1 part, 1.5 parts, 2 parts, 2.5 parts, 3 parts, 3.5 parts, 4 parts, or 4.5 parts, and specific values between the above values, which are not recited in the present application for brevity.

Preferably, a content of the antioxidant in the halogen-free flame-retardant glass fiber-reinforced nylon material in parts by weight is 0.01-5 parts, for example, 0.05 parts, 0.1 parts, 0.5 parts, 1 part, 1.5 parts, 2 parts, 2.5 parts, 3 parts, 3.5 parts, 4 parts, or 4.5 parts, and specific values between the above values, which are not recited in the present application for brevity.

Preferably, a content of the lubricant in the halogen-free flame-retardant glass fiber-reinforced nylon material in parts by weight is 0.01-5 parts, for example, 0.05 parts, 0.1 parts, 0.5 parts, 1 part, 1.5 parts, 2 parts, 2.5 parts, 3 parts, 3.5 parts, 4 parts, or 4.5 parts, and specific values between the above values, which are not recited in the present application for brevity.

In a second aspect, an embodiment of the present application provides a preparation method for the halogen-free flame-retardant glass fiber-reinforced nylon material as described in the first aspect, and the preparation method includes the following steps:
(1) mixing the glass fibers and the terminal alkynoate modifier in a solvent to obtain modified glass fibers; and
(2) blending and extruding the modified glass fibers obtained in step (1), nylon, the phosphate flame retardant, an optional nano-calcium borate, an optional toughening agent, an optional coupling agent, an optional antioxidant, and an optional lubricant, to obtain the halogen-free flame-retardant glass fiber-reinforced nylon material.

Preferably, the solvent in step (1) includes an alkane solvent.

Preferably, the alkane solvent specifically includes cyclohexane.

Preferably, the mixing in step (1) is performed at a temperature of 50-80°C, for example, 53°C, 56°C, 59°C, 62°C, 65°C, 68°C, 71°C, 74°C or 77°C, and specific values between the above values, which are not recited in the present application for brevity.

Preferably, the mixing in step (1) is performed for a period of 1-4 h, for example, 1.5 h, 2 h, 2.5 h, 3 h or 3.5 h, and specific values between the above values, which are not recited in the present application for brevity.

Preferably, the mixing in step (1) is performed in a mixer.

Preferably, a rotational speed of the mixer is 300-700 rpm, for example, 350 rpm, 400 rpm, 450 rpm, 500 rpm, 550 rpm, 600 rpm or 650 rpm, and specific values between the above values, which are not recited in the present application for brevity.

Preferably, the blending and extruding in step (2) is performed in a screw extruder.

Preferably, the blending and extruding in step (2) is performed at a temperature of 245-275°C, for example, 250°C, 255°C, 260°C, 265°C or 270°C, and specific values between the above values, which are not recited in the present application for brevity.

Preferably, a screw speed of the screw extruder is 400-600 rpm, for example, 420 rpm, 440 rpm, 460 rpm, 480 rpm, 500 rpm, 520 rpm, 540 rpm, 560 rpm or 580 rpm, and specific values between the above values, which are not recited in the present application for brevity.

In a third aspect, an embodiment of the present application provides use of the halogen-free flame-retardant glass fiber-reinforced nylon material as described in the first aspect in automobiles.

Preferably, the use includes use in an automotive engine peripheral component or an automotive electronic control system component.

Compared with the prior art, the present application has the following beneficial effects.
(1) The halogen-free flame-retardant glass fiber-reinforced nylon material provided by the embodiment of the present application includes nylon, glass fibers, phosphate flame retardants, nano-calcium borate, and terminal alkynoate modifiers. The terminal alkynoate modifier is added to connect glass fibers and the phosphate flame retardant together and followed by blended with nylon, which can effectively improve the "wick effect" of the glass fiber-reinforced nylon material, and also help to increase the compatibility of nylon, glass fibers and flame retardants, enabling the preparation of glass fiber-reinforced nylon material with excellent flame-retardant properties without adding a large number of flame retardants, and the mechanical properties of the glass fiber-reinforced nylon material itself will not be affected.
(2) In the preferred technical solution provided by an embodiment of the present application, the nano-calcium borate is added as a synergistic flame retardant, which helps to further promote the formation of the carbonization layer of the material during combustion, so that the smoke and combustible substances formed in the material can be greatly reduced in the gas phase, thereby the flame-retardant properties of the material can be further improved.
(3) The nylon material provided by an embodiment of the present application has a tensile strength of 125-135 MPa, an elongation at break of 2.3-2.8%, a flexural modulus of 7200-7900

MPa, a flexural strength of 185-200 MPa, an impact strength of 6.2-6.5 kJ/m², and flame-retardant properties which can reach V-0-V-2 grade.

Other aspects will be appreciated upon reading and understanding the detailed description.

### DETAILED DESCRIPTION

The technical solutions of the present application are further described below in terms of specific embodiments. It should be clear to those skilled in the art that the embodiments are merely used for a better understanding of the present application and should not be regarded as a specific limitation to the present application.

### Preparation Example 1

A terminal alkynoate modifier, a preparation method for which includes: concentrated sulfuric acid was added as a catalyst in a three-mouth bottle, then hexynoic acid and ethanol with a molar ratio of 1:2 were added, heated to 60°C in a nitrogen atmosphere and preserved the temperature for reaction for 30 min, then heated to 100°C and preserved the temperature for reaction for 2 h, and extraction and separation were carried out by using cyclohexane to give the terminal alkynoate modifier.

### Example 1

A halogen-free flame-retardant glass fiber-reinforced nylon material, which includes the following components in parts by weight:

| | |
|---|---|
| nylon | 67 parts; |
| glass fibers | 20 parts; |
| melamine phosphate | 8 parts; |
| nano-calcium borate | 1.5 parts; |
| a terminal alkynoate modifier | 0.5 parts; |
| a toughening agent | 0.3 parts; |
| a coupling agent | 2.5 parts; |
| an antioxidant | 0.12 parts; and |
| a lubricant | 0.08 parts. |

The preparation method for the halogen-free flame-retardant glass fiber-reinforced nylon material provided by this example includes the following steps:
(1) glass fibers and the terminal alkynoate modifier (Preparation Example 1) were mixed in cyclohexane at 60°C for 3 h to give modified glass fibers; and
(2) the modified glass fibers obtained in step (1), nylon (poly(hexamethylene adipamide), PA66, the melt index is 20 g/10 min under the condition of 2.16 kg and 300°C), melamine phosphate, nano-calcium borate, the toughening agent (commercially available maleic anhydride grafted ethylene-octene copolymer elastomer), the coupling agent (γ-aminopropyltriethoxysilane), the antioxidant (Antioxidant 1098) and the lubricant (commercially available silicone oil) were extruded in a screw extruder; a temperature of Zone 1 of the screw extruder was 240°C, a temperature of Zone 2 was 250°C, a temperature of Zone 3 was 260°C, a temperature of Zone 4 was 260°C, a temperature of Zone 5 was 250°C, a temperature of Zone 6 was 250°C, a temperature of Zone 7 was 250°C, a temperature of Zone 8 was 245°C, a temperature of Zone 9 was 245°C, a temperature of Zone 10 was 245°C, a temperature of Zone 11 was 260°C, and a screw speed was 500 rpm; and subjected to cooling, drying and granulation to give the halogen-free flame-retardant glass fiber-reinforced nylon material.

### Example 2

A halogen-free flame-retardant glass fiber-reinforced nylon material, which includes the following components in parts by weight:

| | |
|---|---|
| nylon | 65 parts; |
| glass fibers | 20 parts; |
| melamine phosphate | 6.5 parts; |
| nano-calcium borate | 5 parts; |
| a terminal alkynoate modifier | 0.5 parts; |
| a toughening agent | 0.3 parts; |
| a coupling agent | 2.5 parts; |
| an antioxidant | 0.12 parts; and |
| a lubricant | 0.08 parts. |

The preparation raw materials and preparation method of the halogen-free flame-retardant glass fiber-reinforced nylon material provided by this example were the same as those of Example 1.

### Example 3

A halogen-free flame-retardant glass fiber-reinforced nylon material, which includes the following components in parts by weight:

| | |
|---|---|
| nylon | 60 parts; |
| glass fibers | 25 parts; |
| melamine phosphate | 9 parts; |
| nano-calcium borate | 2.5 parts; |
| a terminal alkynoate modifier | 1 part; |
| a toughening agent | 0.5 parts; |
| a coupling agent | 1.5 parts; |
| an antioxidant | 0.3 parts; and |
| a lubricant | 0.2 parts. |

The preparation raw materials and preparation method of the halogen-free flame-retardant glass fiber-reinforced nylon material provided by this example were the same as those of Example 1.

### Example 4

A halogen-free flame-retardant glass fiber-reinforced nylon material, which differs from Example 1 only in that the additive amount of nano-calcium borate was 6 parts by weight and the additive amount of melamine phosphate was 3.5 parts by weight. Other components, usage amount and preparation method were all the same as those of Example 1.

### Example 5

A halogen-free flame-retardant glass fiber-reinforced nylon material, which differs from Example 1 only in that nano-calcium borate was not added, and the additive amount of melamine phosphate was 9.5 parts by weight. Other components, usage amount and preparation method were all the same as those of Example 1.

### Comparative Example 1

A halogen-free flame-retardant glass fiber-reinforced nylon material, which differs from Example 1 only in that the terminal alkynoate modifier was not added. Other components, usage amount and preparation method were all the same as those of Example 1.

### Comparative Example 2

A halogen-free flame-retardant glass fiber-reinforced nylon material, which differs from Example 1 in that the additive amount of the terminal alkynoate modifier was 3 parts by weight. Other components, usage amount and preparation method were all the same as those of Example 1.

### Comparative Example 3

A halogen-free flame-retardant glass fiber-reinforced nylon material, which differs from Example 1 in that the additive amount of melamine phosphate was 15 parts by weight. Other components, usage amount and preparation method were all the same as those of Example 1.

### Comparative Example 4

A halogen-free flame-retardant glass fiber-reinforced nylon material, which differs from Example 1 in that the additive amount of melamine phosphate was 1 part by weight. Other components, usage amount and preparation method were all the same as those of Example 1.

Performance tests:
(1) Tensile properties: the elongation at break (%) and tensile strength (MPa) of the material were tested according to the methods in ISO 527-1;
(2) Flexural properties: the flexural modulus (MPa) and flexural strength (MPa) of the material were tested according to the methods in ISO 178;
(3) Impact properties: the Charpy notched impact strength of the material was tested according to the methods in ISO 179 under an environment temperature of the test of 23°C; and
(4) Flame-retardant properties: the flame-retardant properties of the material was tested according to the methods in UL94.

The halogen-free flame-retardant glass fiber-reinforced nylon materials provided by Examples 1-5 and Comparative Examples 1-4 were subjected to tests according to the above test methods, and the test results are shown in Table 1.

**Table 1**

| | Tensile strength / MPa | Elongation at break / % | Flexural modulus / MPa | Flexural strength /MPa | Impact strength / kJ/m² | Flame-retardant properties |
|---|---|---|---|---|---|---|
| Example 1 | 130 | 2.8 | 7400 | 190 | 6.5 | V-0 |
| Example 2 | 125 | 2.6 | 7200 | 192 | 6.2 | V-0 |
| Example 3 | 135 | 2.3 | 7900 | 200 | 6.2 | V-0 |
| Example 4 | 128 | 2.6 | 7300 | 185 | 6.3 | V-1 |
| Example 5 | 129 | 2.7 | 7320 | 187 | 6.3 | V-2 |
| Comparative Example 1 | 131 | 2.8 | 7500 | 192 | 6.3 | V-2 |
| Comparative Example 2 | 127 | 2.6 | 7300 | 185 | 6.5 | V-0 |
| Comparative Example 3 | 120 | 2.3 | 6900 | 182 | 5.8 | V-0 |
| Comparative Example 4 | 130 | 2.9 | 7200 | 180 | 6.4 | HB |

According to the data in Table 1, it can be seen that the halogen-free flame-retardant glass fiber-reinforced nylon material provided by the present application has excellent mechanical properties and flame-retardant properties; specifically, the tensile strength of the nylon materials provided in Examples 1-5 is 125-135 MPa, the elongation at break is 2.3-2.8%, the flexural modulus is 7200-7900 MPa, the flexural strength is 185-200 MPa, the impact strength is 6.2-6.5 kJ/m², and the flame retardant properties are V-0-V-2 grade.

Comparing the data of Example 1 and Comparative Example 1, it can be found that the mechanical properties and flame-retardant properties of the nylon material obtained without adding the terminal alkynoate modifier have decreased.

Additionally, comparing the data of Example 1 and Comparative Example 2, it can be found that an overly high additive amount of the terminal alkynoate modifier is unable to further improve the mechanical properties and flame-retardant properties of the nylon material.

Further comparing the data of Example 1 and Comparative Examples 3-4, it can also be found that an overly high additive amount of melamine phosphate (Comparative Example 3) will lead to poor mechanical properties of the obtaining nylon material; and an overly low additive amount of melamine phosphate (Comparative Example 4) will lead to poor flame-retardant properties of the nylon material.

Finally, comparing the data of Example 1 and Example 5, it can also be found that the flame-retardant properties of the final obtained nylon material will be affected without adding nano-calcium borate.

The applicant declares that the present application illustrates a halogen-free flame-retardant glass fiber-reinforced nylon material and a preparation method therefor and use thereof by the above examples, but the present application is not limited to the above examples, that is, the present application does not necessarily rely on the above examples to be implemented. Those skilled in the art should understand that any improvements of the present application, the equivalent substitution of each raw material, the addition of auxiliary ingredients, and the selection of specific methods shall fall within the protection scope and disclosure scope of the present application.

## Claims

1. A halogen-free flame-retardant glass fiber-reinforced nylon material, comprising the following components in parts by weight:
| | |
|---|---|
| nylon | 45-85 parts; |
| glass fibers | 10-55 parts; |
| a phosphate flame retardant | 2-10 parts; and |
| a terminal alkynoate modifier | 0.01-2 parts. |

2. The halogen-free flame-retardant glass fiber-reinforced nylon material according to claim 1, wherein the phosphate flame retardant comprises any one or a combination of at least two of melamine phosphate, ammonium polyphosphate or an organic aluminum hypophosphite.

3. The halogen-free flame-retardant glass fiber-reinforced nylon material according to claim 1 or 2, wherein the glass fiber is alkali-free glass fiber.

4. The halogen-free flame-retardant glass fiber-reinforced nylon material according to any one of claims 1-3, wherein raw materials for preparing the terminal alkynoate modifier comprises an alkynoic acid and a fatty alcohol.

5. The halogen-free flame-retardant glass fiber-reinforced nylon material according to any one of claims 1-4, wherein the alkynoic acid comprises hexynoic acid and/or 10-undecynoic acid;
preferably, the fatty alcohol comprises ethanol and/or propanol;
preferably, the terminal alkynoate modifier is prepared from the following method, which comprises: subjecting the alkynoic acid and the fatty alcohol to a reaction in a solvent, extracting and separating to obtain the terminal alkynoate modifier; and
preferably, the solvent comprises concentrated sulfuric acid.

6. The halogen-free flame-retardant glass fiber-reinforced nylon material according to any one of claims 1-5, wherein the halogen-free flame-retardant glass fiber-reinforced nylon material further comprises nano-calcium borate;
preferably, a content of the nano-calcium borate in the halogen-free flame-retardant glass fiber-reinforced nylon material is 1-5 parts by weight.

7. The halogen-free flame-retardant glass fiber-reinforced nylon material according to any one of claims 1-6, wherein the halogen-free flame-retardant glass fiber-reinforced nylon material further comprises any one or a combination of at least two of a toughening agent, a coupling agent, an antioxidant or a lubricant;
preferably, the toughening agent comprises any one or a combination of at least two of methyl methacrylate-butadiene-styrene copolymer, maleic anhydride grafted ethylene-octene copolymer elastomer, ethylene-butyl acrylate-glycidyl methacrylate copolymer, ethylene-methyl acrylate-glycidyl methacrylate copolymer, or methyl methacrylate-styrene-organosilicon copolymer;
preferably, the coupling agent comprises any one or a combination of at least two of γ-aminopropyltrimethoxysilane, γ-aminopropyltriethoxysilane, γ-glycidyloxypropyltrimethoxysilane or γ-glycidyloxypropyltriethoxysilane;
preferably, the antioxidant comprises any one or a combination of at least two of β-(3,5-di-tert-butyl-4-hydroxyphenyl)propionate n-octadecyl alcohol ester, 2,6-tributyl-4-methylphenol, bis(3,5-tributyl-4-hydroxyphenyl)thioether, triethylene glycol bis-β-(3-tert-butyl-4-hydroxy-5-methylphenyl)propionate, or N,N'-bis[3-(3,5-di-tert-butyl-4-hydroxyphenyl)propionyl]hexanediamine;
preferably, the lubricant comprises any one or a combination of at least two of pentaerythritol stearate, vinyl wax or silicone oil.

8. The halogen-free flame-retardant glass fiber-reinforced nylon material according to claim 7, wherein a content of the toughening agent in the halogen-free flame-retardant glass fiber-reinforced nylon material is 0.1-1 part by weight;
preferably, a content of the coupling agent in the halogen-free flame-retardant glass fiber-reinforced nylon material is 0.5-5 parts by weight;
preferably, a content of the antioxidant in the halogen-free flame-retardant glass fiber-reinforced nylon material is 0.01-5 parts by weight;
preferably, a content of the lubricant in the halogen-free flame-retardant glass fiber-reinforced nylon material is 0.01-5 parts by weight.

9. A preparation method for the halogen-free flame-retardant glass fiber-reinforced nylon material according to any one of claims 1-8, which comprises the following steps:
(1) mixing the glass fibers and the terminal alkynoate modifier in a solvent to obtain modified glass fibers; and
(2) blending the modified glass fibers obtained in step (1), nylon, the phosphate flame retardant, an optional nano-calcium borate, an optional toughening agent, an optional coupling agent, an optional antioxidant, and an optional lubricant, and performing melt extrusion to obtain the halogen-free flame-retardant glass fiber-reinforced nylon material.

10. The preparation method according to claim 9, wherein the solvent in step (1) comprises an alkane solvent;
preferably, the alkane solvent specifically comprises cyclohexane.

11. The preparation method according to claim 9 or 10, wherein the mixing in step (1) is performed at a temperature of 50-80°C;
preferably, the mixing in step (1) is performed for a period of 1-4 h.

12. The preparation method according to any one of claims 9-11, wherein the mixing in step (1) is performed in a mixer;
preferably, a rotational speed of the mixer is 300-700 rpm.

13. The preparation method according to any one of claims 9-12, wherein the blending and extruding in step (2) is performed in a screw extruder;
preferably, the blending and extruding in step (2) is performed at a temperature of 245-275°C; preferably, the blending and extruding is performed in a screw extruder;
preferably, a screw speed of the screw extruder is 400-600 rpm.

14. Use of the halogen-free flame-retardant glass fiber-reinforced nylon material according to any one of claims 1-8 in automobiles;
preferably, the use comprises use in an automotive engine peripheral component or an automotive electronic control system component.
